# EUROPEAN PATENT SPECIFICATION

(11) **EP 2 517 768 B1**
(45) Date of publication and mention of the grant of the patent: **16.07.2014**
(21) Application number: 11164176.7
(22) Date of filing: 28.04.2011
(51) Int. Cl.: B01D 29/01, B01D 29/64

(54) **Self-cleaning filter and method**
Selbstreinigender Filter und Verfahren
Filtre auto-nettoyant et procédé

(43) Date of publication of application: 31.10.2012
(73) Proprietor: Falmer Investments Limited, Road Town, Tortola (VG)
(72) Inventor: Tsui, William Tak Ming, Causeway Bay Hong Kong (CN)
(74) Representative: Ealey, Douglas Ralph

(56) References cited:
- EP-A1- 0 557 258
- EP-A2- 0 312 354

## Description

The invention relates to a self cleaning filter and corresponding method.

In general, filters are widely used in many industries involving fluid treatment, for example to obtain retentate (particulates or other contaminants captured by the filter), enabling the recycling of permeate (the fluid and any residual particulates that pass through the filter) for re-use, thereby preserving such fluids which could possibly, in some instances, be costly. Thus it could save a portion of production costs for manufacturers.

In consideration of improving the efficiency of a filter, some self-cleaning filters are introduced to cut unnecessary time for workers to remove retentate during the filtering process. One of the existing designs removes retentate from the membrane of the filter, allowing it to be discharged or collected, by using a blade or a number of sharp-edged scrapers driven by a motor within a closed chamber. Such a method is often used in the fabric industry to remove the retentate, in particular lint accumulated on the filter of a dyeing machine.

There have been concerns regarding the retentate being accumulated on the blades or edges of scraper besides the filter itself. When such a case happens, it can block the filter and slow down the process, affecting the fluid pressure which may in turn lead to a system breakdown. In addition, the retentate would generate an increasing drag as it grows larger between the moving brush and the filter membrane. Such a reaction force acting on the scraper can damage the connecting parts or even the driving motor.

Although measures have been taken to prevent the above problem from taking down the machine, e.g. installing a spring between the end of blade(s) and the rotating shaft for better tolerance, some retentate would still remain on the blade(s) during operation. It would not harm the mechanical parts but suffers a great set-back in efficiency.

In the prior art, as disclosed for example in EP 0 557 258, a spring-like mean is adapted to a hinge on a scraper to prevent over-pressing the filter. However the spring (item 14) is exposed to the fluid containing fibrous substance, e.g. lint, thus prolonged usage requires constant removal of sediment on the spring to prevent malfunctioning. Another example as demonstrated in EP 0 312 354 suffers the same problem. The spring (item 44) is exposed in the incoming fluid without any means of shielding or protection. Although a blade wiping wire (item 50) is introduced to remove contaminant on the scrapers, it needs replacement under repeated collision.

The present invention seeks to address or mitigate this problem.

In a first aspect, a filter apparatus is provided as in claim 1.

Further respective aspects and features of the invention are defined in the appended claims.

In an embodiment of the present invention, a filter apparatus for an incoming fluid having a retentate and a permeate comprises a container assembly for incoming fluid, an inlet assembly for delivering the incoming fluid to the container assembly, a trough assembly for collecting retentate falling off the scraper(s), and an outlet assembly for the permeate; and a motorized shaft connected to an arm with a plurality of scraping blades rotating along the axis of the circular filter the arm and blade having a free movable joint and a spring on the arm allowing the blade to move.

The incoming fluid first enters the container from the inlet pipe and follows a path as directed while the retentate is separated and left inside the interior surface of the filter membrane or plate. The blades scrape and accumulate a portion of retentate in a circular motion. With a certain weight of retentate being accumulated on the blade, it flips downwards at its joint to allow the retentate to fall off by gravity, then restores to its original position within a period of time, repeating the function throughout the filtering process.

Further embodiments of the present invention will now be described by way of example with reference to the accompanying drawings, in which:
Figure 1 is a schematic diagram showing the corresponding number of different parts of the filter being described.
Figure 2 is a schematic diagram showing the exploded view of the scraper assembly.
Figure 3 is a schematic diagram showing the angle of hinge and scraping blade made with the plane of rotation of the blade assembly.
Figure 4 is a schematic diagram showing an interaction between the scraping blade and the filter.
Figure 5 shows the chamfered space between the scraping blade and elongated tubular shell.
Figure 6 shows an alternative design of filter plate (curved and plain) and its corresponding configuration of scraping blade movement.
Figure 7 is a flow diagram of a method of filtration according to an embodiment of the present invention.

A self cleaning filter and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

The invention herein described is suitable for but not limited to the fabric industry. Hence for the purposes of clarity the description is directed to dyeing practices and will focus on a fluid application, where lint is the major retentate to be filtered. However it will be appreciated that the teachings of the self cleaning filter are not limited to this application.

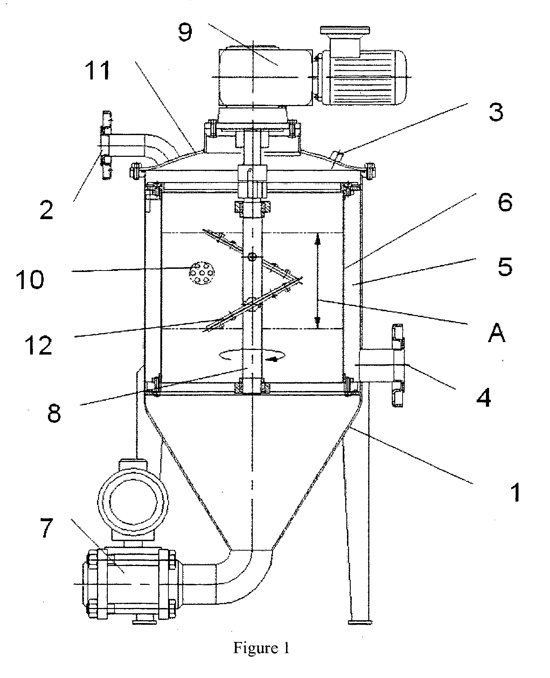

As the embodiment in Figure 1 shows, a filter comprises a hollow container (1) with various component parts to be described hereafter. The container, which is typically cylindrical and erected vertically, is connected to a fluid inlet (2) and a pressurized gas inlet (3) at the top and a permeate outlet (4) on the side wall. The inlet and outlet are designed to connect to the pipe network of a dyeing machine and thus a part of the dye liquor circulation is carried through the filter. The dye liquor enters the chamber from the inlet, filling it up while the filtering is taking place, then passes through the filter to another volume (5) enclosed by the filter plate (6) and the inner wall of the container (1), where it is directed to the outlet. There is a trough at the bottom of the container connected to a retentate outlet (7) for the retentate to be flushed out after the filtering process.

The shaft (8) is mounted coaxially with the circular vessel. There are water-proof seals covering the spaces between any parts of the assembly to prevent leakage of dye liquor to undesirable volume of processing or out of the system during operation. The motor (9) or a similar driving system is connected to the end of the shaft for its rotation.

The cylindrical filter plate is also placed coaxially to the shaft so the shaft rotates in the center of the filter plate. The filter plate has a plurality of perforations (10) (partly shown in Figure 1), allowing the dye liquor to pass through and leave the retentate in the interior of the filter. The filter plate is framed so it could be removed from the top of the container for maintenance and/or cleaning purposes if necessary. In such a case there may be an opening, such as a lid (11) on the top of the container for removal and installation of the filter.

In operation, the dye liquor containing lint is directed from the inlet at the top of the container. At this stage the trough exit is closed by a valve while there is only the permeate outlet (3a) being opened. The container is to be filled up by the dye liquor for filtering to take place. Hence the retentate remaining inside the volume enclosed by the filter vessel is accumulated at the bottom of the container near the trough exit. Meanwhile, part of the retentate may be left on the top of the moving blade(s) as the fluid flows from top to bottom. During the filtering process, the dye liquor is forced to exit from the only outlet of the system given that the trough exit is sealed. However the retentate, e.g. lint, is too big to pass through the perforations, thus it is drawn towards and left on the interior surface or the upstream side of the filter. The blade(s) is/are now used to scrape over the perforated region on the filter plate, removing the lint from the surface, so it would be either accumulated on the surface of the moving blade(s) or sink into the trough inside the chamber enclosed by the filter plate, or follow the turbulence generated by the blade(s) until it rests somewhere on the filter wall again.

In the system, one or several scrapers are connected to the shaft. When multiple scrapers are installed they can be, though not limited to, evenly spaced angularly on the shaft to improve efficiency. The example herein uses a pair of scrapers as shown in Figure 1, where the scrapers are evenly spaced angularly, i.e. they are 180 degrees apart from each other. Since the scrapers are inclined at an angle, each scraper would cover a circular region with a certain height. Apparently, in those cases using multiple scraping knives, the vertical distance between the blades is to be adjusted in coordination with its inclined angle in order to let all blades sweep through the entire perforated region. Using the same example in Figure 1, preferably there should be no uncovered spaces between two circular swept regions vertically where arrow (A) shows the height position of the perforated region.

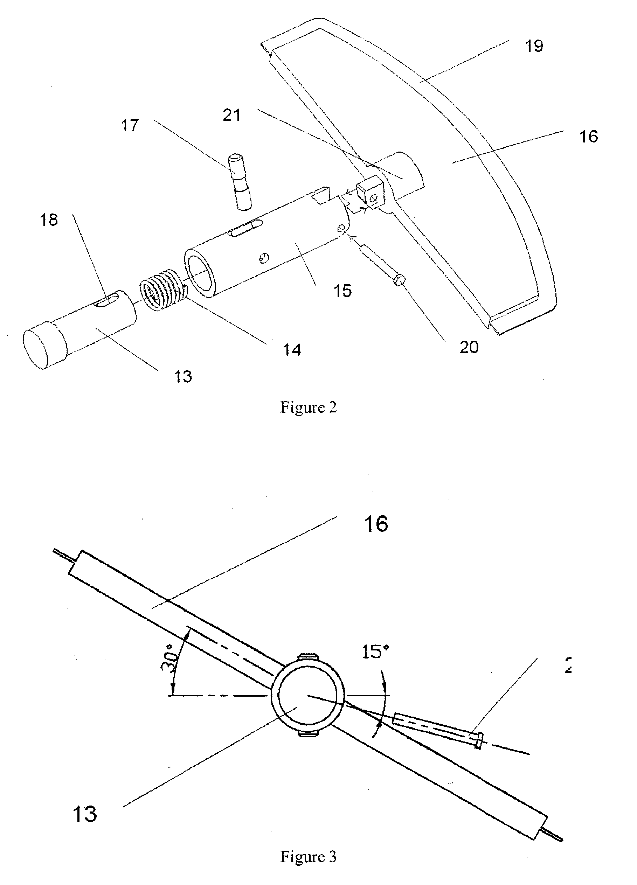

Referring now to Figure 2, this shows in an exploded view an embodiment of a hinged retentate-scraping blade (12) (or 'scraper' hereafter mentioned). It comprises a solid rod (13), a spring (14), a typically tubular shell (15) and a scraping blade (16). One end of the solid rod is fastened to the shaft and the other end is covered by the shell, while the spring is inserted between to provide a continuous opposing force between them, so that the end comprising the shell as well as the scraping blade is propelled towards the inner wall of the filter plate. A stud (17) is fitted within the ditch (18) on both the tubular shell and solid rod so the range of extension or contraction of the blade is limited. It is evident for a skilled person to adjust the allocation of the ditch along the shell so the scraper is able to touch and scrape along the interior of the filter plate.

In an embodiment of the present invention, a scraping edge is coincident to the filter surface. In addition, the blade is fixed at an approximate angle of 30 degrees to the plane of rotation of its corresponding blade (see Figure 3). During motion, the direction of rotation goes towards the higher side of the lateral end of the scraping blade. For example, in Figure 1, the surface slope of the blade goes up in a counter clockwise direction (viewing from top), so should its rotation go also. Other angles between the blade surface and plane of rotation can be employed as appropriate depending upon the configuration of the blade and filter, for example to ensure that the blade's scraping edge has a vertical extent substantially similar to the extent of the perforations in the filter. Similarly, different shape designs of scraping blade can be envisaged as required.

As lint starts to accumulate on the blade while the system is working, the spring is squeezed towards the centre of rotation. It acts as a tolerance allowing the scraping blade to move away from the vessel wall, hence it mitigates the obstructive force created by the lint between the blade and filter wall.

However, as the accumulated lint grows bigger and bigger, the spring can no longer be compressed as limited by the set of knob and ditch. Yet the motor may still operate normally, given that the compressed spring safeguards the speed of rotation and minimizes the undesirable shear stress on the shaft and parts. Notably this time the blade is covered by batches of lint, where the scraping edges cannot further remove upcoming retentate on the filter. At this stage the blade is considered not functional.

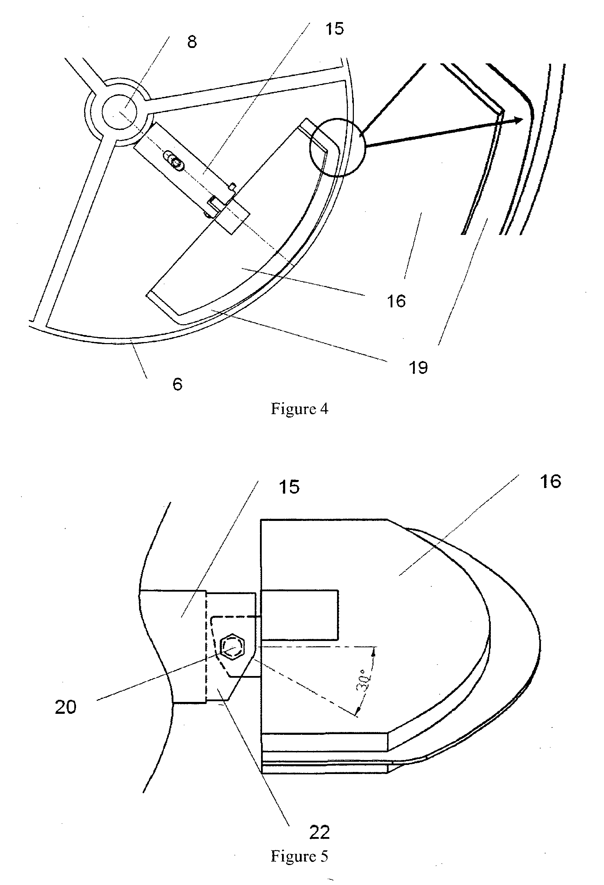

Accordingly a hinge joint is added between the scraping blade and the elongate tubular shell, allowing the blade to move freely within a range of angles. The range of angles can be however modified by changing the surface of contact between the blade and shell. Figure 5 illustrates an embodiment of how the movable scraping blade is limited within a range of angles with respect to the axis of the elongate shell.

At the hinge joint connecting the tubular shell and the scraping blade, there are drilled holes on each other and they are configured to be concentric. A screw and nut set fitting the size of the holes is fastened through them when aligned concentrically in order to create an elbow joint such that the scraping blade can rotate on a planar surface perpendicular to the central axis defined by centre of the joint, with the said axis as its centre of rotation. However various means of connection rather than using screws can be employed to make any movable joints.

In order to limit the flipping range, a circular block is extruded from the scraping blade. As a result the circular face of the extruded part would collide with the external wall (22) of the elongate shell, chamfered for example at an angle of 30 degrees at the lower half as shown in Figure 5. Hence the scraping blade (shaded in Figure 5) is blocked on either side whenever a physical collision occurs, where the flipping range herein defined is theoretically the same as the chamfered angle as shown in Figure 5. Clearly the shape and thickness of said extruded part on the scraping blade as well as the angle of chamfer on the tubular shell can be modified for any desirable range, for example to allow downward movement of the moveable joint by up to a predetermined angle lying within the range 1 to 90 degrees.

Under normal circumstances without loads, the scraping blade (14) would stay in its uppermost position in motion, i.e. the circular face of the extruded part touching the upper external wall at the end of tubular shell, due to rotational inertia. The scraping edge in this position should be touching the filter and this is defined as its origin hereafter mentioned.

In addition to rotational inertia, depending on the angle of the blade in the fluid and the relative motion of the fluid with respect to the blade, the interaction between the blade and the fluid may also generate a lifting force that pushes the blade to its uppermost position.

The speed of rotation, the fluid pressure inside the chamber as well as the weight of the scraping blade is to be well coordinated such that the above requirements could be achieved since there is no external support against the free fall of the scraping blade.

When retentate accumulates on the blade, it will either trigger the spring to contract or further grows in size until the flipping joint cannot withstand its weight. The scraping blade is then flipped down at an angle by the joint, so a gap is created between the scraping edge and the surface of the filter wall as shown in Figure 5. As a result the retentate can slide along the inclined surface of the blade and fall off.

In other words, where retentate accumulates on the scraping edge between the edge and the filter, the spring can contract to accommodate the presence of the retentate. In this circumstance the retentate may then fall of its own accord to the bottom of the filter through the gap so provided, or may continue to accumulate until the spring has contracted to the fullest extent allowed by the knob and ditch. However, in either case and/or where additionally retentate accumulates on other parts of the blade, there will come a point where the mass of the retentate and/or the drag of the retentate combine to cause the hinged blade to fall from its upmost position, so helping the retentate to fall off the blade. It will be understood therefore that the mass and/or drag of the retentate generates a force that acts against the rotational inertia and/or lift of the blade to an extent sufficient to cause the blade to flip (i.e. droop, drop, or otherwise articulate downwards by virtue of the hinge).

For example, an accumulation of retentate on top of the blade may provide a downward gravitational force that acts against the rotational inertia and any lift of the blade, causing the blade to droop. Similarly an accumulation of retentate on the scraping edge of the blade may cause it to slow down by friction against the filter and/or by hydrodynamic drag, directly reducing rotational inertia and any lift generated by the blade, and so again causing it to droop.

The threshold amount of retentate required to cause the blade to flip in this manner is a function of the nature of the retentate, the angle and rotation of the blade, the flow of the fluid in the filter and other factors. The threshold may be empirically determined or may simply be adjusted by a proxy change in one of the above factors, such as (but not limited to) blade rotation speed or unloaded blade mass.

In an embodiment of the present invention, as noted above the arrangement of the scraping blade is inclined 30 degrees to horizontal, or some other suitable inclination for the desired filter configuration, but additionally the hinge is inclined 15 degrees to horizontal, or more generally a proportionately smaller inclination to the scraping blade, as shown in Figure 3. The edge of the scraping blade is here a half-moon shape, and so due to the above three factors of blade angle, hinge angle and blade shape, there is some gap between the scraping edge and the surface of the filter wall and the major surface plane of scraping blade is not parallel to the axis of hinge joint. The maximum gap would occur at the each end of the scraping edge as shown in Figure 4.

Hence embodiments of the present invention allow the blade to move in an additional degree of freedom to the radial compression provided by the spring. The hinged blade inclined at an angle to its plane of rotation can easily get rid of any retentate accumulated on its surface.

After unloading the retentate, if previously compressed then the spring rebounds, and additionally the blade can return to its extended position, where the scraping edge is now substantially free of lint. Hence advantageously, the filtering efficiency is restored and sustained throughout the filtering process.

When the filtering process is set to complete, the permeate outlet is closed and the retentate outlet is opened while the fluid stops coming from the fluid inlet. Instead, pressurized gas is injected through inlet into the chamber. As it occupies certain volume, the gas forces the remaining fluid inside the chamber to come out through the retentate outlet, which acts as the only exit of the system, and the retentate, previously sunk near the exit, will be flushed out from the filter system with the remaining fluid.

In embodiments of the present invention, a hinged scraping blade is not limited to its layout of scraping edge and its flipping angle herein described when the configuration of the filter is different in various situations.

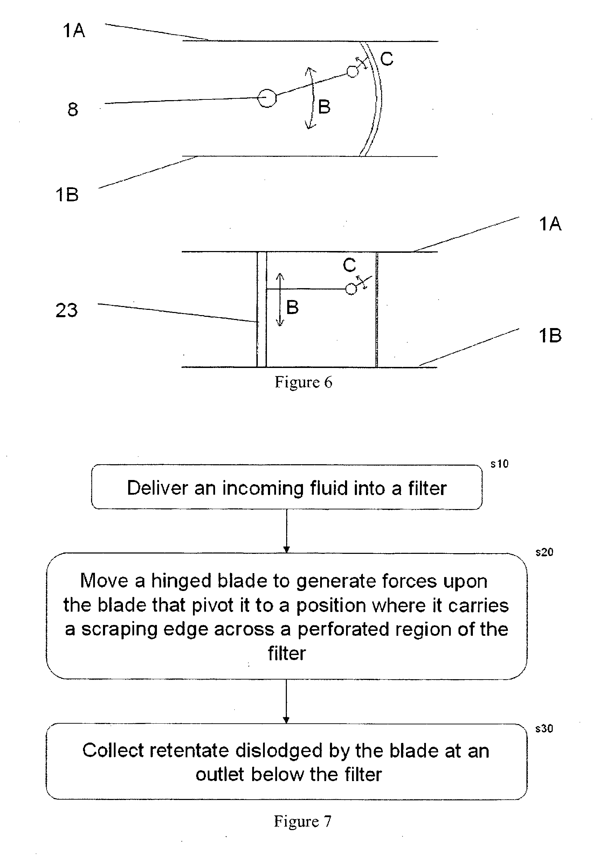

For example Figure 6 shows a cross-sectional view of an alternative embodiment of a filter apparatus. In this set up, the filter plate is placed across the fluid flow path, with both ends of the filter connected to vessel wall, and the corresponding moving direction of the scrapers and hinged scraping blades are indicated by arrows (B) and (C) respectively. The plate is curved with its concave side facing the fluid inlet. A shaft is placed coaxially to the plate, connected with one or more blades (only one blade is used in this example) with its scraping edge touching the filter wall when extended. Rather than rotating in a full circle the shaft rotates back and forth in a range of angles such that the blade(s) can sweep the perforated region on the filter plate repeatedly. As with the previous embodiments, it is possible that retentate would accumulate on the blade if a hinge is not employed. Thus adding an elbow joint can reduce the chance of the scraping edge being covered by the retentate while the blade is in motion.

Figure 6 also shows an embodiment where the filter wall is straight and lies across the flow path defined by vessel wall 1A and 1A. A rail (23) is used to guide the blade so it can move parallel to the filter surface. It will be appreciated that in the above embodiments, a motor or other suitable driving mechanism is also provided to drive the said blade(s) in angular or linear motion.

In addition, the design of connection is not limited to physical contact between the parts. For example any hydraulic or pneumatic assemblies suitable for making a joint and/or replacing the spring to achieve the same functionalities are possible.

In summary, in embodiments of the present invention a filter apparatus comprises one or more moveable hinged scraping blades with scraping edges arranged in operation to sweep across perforations on a filter plate. The hinged blade in turn may comprise an elongated shell and a scraping knife having the scraping edge. A first end of the elongated shell is connected to the scraping blade by a moveable joint. In addition the hinged blade may comprise a solid rod having a first end attachable to a main driving shaft, and a spring, with a second end of the solid rod spring-mounted within a second end of the elongated shell.

With such a hinged blade, the first end of the elongated shell may be shaped to allow downward movement of the moveable joint by up to a predetermined angle lying within the range 1 to 90 degrees. Meanwhile, the major surface plane of the scraping blade of the hinged blade may be mounted so that it is not parallel to the axis of its hinge joint. Similarly, the major surface plane of the scraping blade may be inclined with respect to the plane of rotation of the hinged blade.

In operation, the hinged blade is arranged to pivot upwards to a position having a predetermined distance from the filter plate in response to the forces applied to it. However, the hinged blade is also arranged to pivot downwards in response to further forces applied to it during operation when accumulated retentate on the hinged blade exceeds a threshold amount.

Such hinged blades can be used for example in a filter apparatus comprising a container for housing the filter plate, a fluid inlet for delivering the incoming fluid, an outlet for discharging the permeate and an outlet for discharging the retentate. Typically, the filter plate is tubular, and the outlet for discharging the retentate comprises a funnel with a narrowing cross section positioned at the bottom of the container.

For a tubular filter, the filter apparatus typically also comprises a shaft coaxially positioned with respect to the filter plate and having one or more scrapers attached to it, so that in operation rotation of the shaft carries the scraping edge of the hinged blade across the perforations of the filter plate.

Such a filter apparatus may be installed as part of a dyeing machine.

Referring now to Figure 7, a corresponding method of filtering a fluid comprising permeate and retentate comprises:
In a first step s10, delivering an incoming fluid into a filter;
In a second step s20, moving a hinged blade to generate forces upon the blade that pivot it to a position where it carries a scraping edge across a perforated region of the filter; and
In a third step s30, collecting retentate dislodged by the blade at an outlet below the filter.

Use of the filter apparatus may encompass a filtering phase and a maintenance or cleaning phase, and hence the method may further comprise the steps of, in a filtering phase, opening a permeate outlet and closing a retentate outlet, and in a maintenance phase, closing the permeate outlet, opening the retentate outlet, and forcing the retentate through the retentate outlet under gas pressure.

It will be apparent to a person skilled in the art that variations in the above methods corresponding to operation of the various embodiments of the apparatus as described and claimed herein are considered within the scope of the present invention, including but not limited to:
- Shaping a first end of an elongated shell to allow downward movement of a moveable joint of the hinged blade by up to a predetermined angle lying within the range 1 to 90 degrees;
- Inclining the major surface plane of a scraping blade of the hinged blade with respect to the axis of its hinge joint;
- Inclining the major surface plane of the scraping blade of the hinged blade with respect to the plane of rotation of the hinged blade;
- Pivoting the hinged blade to a position having a predetermined distance from a filter plate in response to the forces applied to it during operation;
- Pivoting the hinged blade downwards in response to the forces applied to it during operation when accumulated retentate on the hinged blade exceeds a threshold amount; and
- Incorporating a filter apparatus with one or more such hinged blades within a dyeing machine.

## Claims

**1.** A filter apparatus for an incoming fluid comprising permeate and retentate, the filter apparatus comprising:
a shaft (8), operable to rotate;
a cylindrical filter plate (6) placed coaxially with the shaft; and
one or more scrapers (12) connected to the shaft;
and **characterised in that** each scraper comprises:
a scraping blade (16);
a rod (13) connecting the scraper to the shaft;
a hinge between the rod and the scraping blade; and
a container (1) for housing the cylindrical filter plate, a fluid inlet (2) for delivering the incoming fluid, an outlet (4) for discharging the permeate and an outlet (7) for discharging the retentate;
and wherein
in operation, rotation of the shaft carries the scraping blade across perforations of the filter plate; and
in response to a threshold weight of retentate accumulating on the scraping blade, the hinge is adapted to flip down to allow the retentate to fall off by gravity and to restore to its original position within a period of time.

**2.** A filter apparatus according to claim 1, in which the hinged blade comprises;
an elongate shell (15); and
a first end of the elongate shell being connected to the scraping blade by the hinge.

**3.** A filter apparatus according to claim 2, in which the hinged blade comprises;
a spring (14); and in which
the solid rod (13) has a first end attachable to a main driving shaft; and
in which a second end of the solid rod is spring-mounted within a second end of the elongate shell.

**4.** A filter apparatus according to any one of the preceding claims, comprising a stud (17) and ditch (18) positioned in the shell and rod configuration and arranged to limit the range of the shell and rod's relative displacement.

**5.** A filter apparatus according to claim 2 or claim 3, in which the first end of the elongate shell is shaped to allow movement of the hinge by up to a predetermined angle lying within the range 1 to 90 degrees.

**6.** A filter apparatus according to any one of the preceding claims, in which the major surface plane of a scraping blade of the hinged scraper is not parallel to the axis of its hinge joint.

**7.** A filter apparatus according to any one of the preceding claims, in which the major surface plane of a scraping blade of the hinged scraper is inclined with respect to the plane of rotation of the hinged scraper.

**8.** A filter apparatus according to any one of the preceding claims, in which the hinged scraper is arranged to pivot to a position having a predetermined distance from the filter plate in response to the forces applied to it during operation.

**9.** A filter apparatus according to claim 9 in which the outlet for discharging the retentate comprises a funnel with a narrowing cross section positioned at the bottom of the container.

**10.** A dyeing machine comprising a filter apparatus according to any one of the preceding claims.

## Patentansprüche

**1.** Filtervorrichtung für ein einströmendes Fluid, umfassend Permeat und Retentat, wobei die Filtervorrichtung Folgendes umfasst:
eine Welle (8), die zum Drehen betrieben wird;
eine zylindrische Filterplatte (6), die koaxial mit der Welle angeordnet ist; und einen oder mehrere Abstreifer (12), die mit dem Schaft verbunden sind; und **dadurch gekennzeichnet, dass** jeder Abstreifer Folgendes umfasst: ein Abstreifschild (16);
eine Stange (13), die den Abstreifer mit der Welle verbindet; ein Gelenk zwischen der Stange und dem Abstreifschild; und
einen Behälter (1) zum Unterbringen der zylindrischen Filterplatte, einen Fluideinlass (2) zum Abgeben des einströmenden Fluids, einen Auslass (4) zum Entleeren des Permeats und einen Auslass (7) zum Entleeren des Retentats;
und wobei während des Betriebs die Drehung der Welle das Abstreifschild über Perforationen der Filterplatte trägt; und
wobei als Reaktion auf ein Schwellengewicht von Retentat, das sich auf einem Abstreifschild ansammelt, das Gelenk zum Herunterklappen ausgelegt ist, damit das Retentat durch Schwerkraft herunterfällt und seine ursprüngliche Position innerhalb eines Zeitraums wiederherstellt.

**2.** Filtervorrichtung nach Anspruch 1, wobei das Schild mit Gelenk eine längliche Hülse (15) umfasst, und ein erstes Ende der länglichen Hülse über das Gelenk mit dem Abstreifschild verbunden ist.

**3.** Filtervorrichtung nach Anspruch 2, wobei das Schild mit Gelenk eine Feder (14) umfasst, und
die solide Stange (13) ein erstes Ende aufweist, das an der Hauptantriebswelle befestigt werden kann; und
wobei ein zweites Ende der soliden Stange innerhalb eines zweiten Endes der länglichen Hülse federbefestigt ist.

**4.** Filtervorrichtung nach einem der vorherigen Ansprüche, umfassend einen Zapfen (17) und einen Graben (18), die in der Hülse der Stangenkonfiguration angeordnet sind, und zum Begrenzen des Hülsenbereichs und der relativen Stangenverschiebung angeordnet sind.

**5.** Filtervorrichtung nach Anspruch 2 oder 3, wobei das erste Ende der länglichen Hülse ausgebildet ist, um die Bewegung des Gelenks bis zu einem bestimmten Winkel zu ermöglichen, der in dem Bereich von 1 bis 90 Grad liegt.

**6.** Filtervorrichtung nach einem der vorherigen Ansprüche, wobei die Hauptoberflächenebene eines Abstreifschildes eines mit Gelenk versehenen Abstreifers nicht parallel zu der Achse des Gelenkverbindungsstücks verläuft.

**7.** Filtervorrichtung nach einem der vorherigen Ansprüche, wobei die Hauptoberflächenebene eines Abstreifschildes eines mit Gelenk versehenen Abstreifers in Bezug auf die Drehebene des mit Gelenk versehenen Abstreifers geneigt ist.

**8.** Filtervorrichtung nach einem der vorherigen Ansprüche, wobei der mit Gelenk versehene Abstreifer angeordnet ist, um zu einer Position zu drehen, die einen vorbestimmten Abstand von der Filterplatte als Reaktion auf die während des Betriebs angelegten Kräfte aufweist.

**9.** Filtervorrichtung nach Anspruch 9, wobei der Auslass zum Ablassen des Retentats einen Trichter mit einem sich verengenden Querschnitt umfasst, der an der Unterseite des Behälters angeordnet ist.

**10.** Färbemaschine, umfassend eine Filtervorrichtung nach einem der vorherigen Ansprüche.

## Revendications

**1.** Appareil de filtre pour un fluide entrant comprenant un perméat et un rétentat, l'appareil de filtre comprenant :
un arbre (8), pouvant fonctionner de manière à tourner ;
une plaque filtrante cylindrique (6) placée de manière coaxiale à l'arbre ; et
un ou plusieurs racleurs (12) reliés à l'arbre ;
et **caractérisé en ce que** chaque racleur comprend :
une lame racleuse (16) ;
une tige (13) reliant le racleur à l'arbre ;
une articulation entre la tige et la lame racleuse ; et
un contenant (1) pour loger la plaque filtrante cylindrique, une entrée de fluide (2) pour distribuer le fluide entrant, une sortie (4) pour évacuer le perméat et une sortie (7) pour évacuer le rétentat ;
et
lors du fonctionnement, la rotation de l'arbre transportant la lame racleuse en travers de perforations de la plaque filtrante ; et
en réponse à un poids seuil de rétentat s'accumulant sur la lame racleuse, l'articulation étant conçue pour basculer vers le bas pour permettre au rétentat de tomber par gravité et pour revenir à sa position d'origine dans un laps de temps.

**2.** Appareil de filtre selon la revendication 1, dans lequel la lame articulée comprend :
une enveloppe allongée (15) ; et
une première extrémité de l'enveloppe allongée étant reliée à la lame racleuse au moyen de l'articulation.

**3.** Appareil de filtre selon la revendication 2, dans lequel la lame articulée comprend :
un ressort (14) ; et dans lequel
la tige pleine (13) a une première extrémité pouvant être fixée à un arbre d'entraînement principal ; et
dans lequel une deuxième extrémité de la tige pleine est montée sur ressort à l'intérieur d'une deuxième extrémité de l'enveloppe allongée.

**4.** Appareil de filtre selon l'une quelconque des revendications précédentes, comprenant une goupille (17) et une rainure (18) positionnées dans la configuration d'enveloppe et de tige et agencées pour limiter la plage du déplacement relatif de l'enveloppe et de la tige.

**5.** Appareil de filtre selon la revendication 2 ou la revendication 3, dans lequel la première extrémité de l'enveloppe allongée est formée de manière à permettre le mouvement de l'articulation jusqu'à un angle prédéfini situé dans la plage de 1 à 90 degrés.

**6.** Appareil de filtre selon l'une quelconque des revendications précédentes, dans lequel le plan de surface principal d'une lame racleuse du racleur articulé n'est pas parallèle à l'axe de son joint d'articulation.

**7.** Appareil de filtre selon l'une quelconque des revendications précédentes, dans lequel le plan de surface principal d'une lame racleuse du racleur articulé est incliné par rapport au plan de rotation du racleur articulé.

**8.** Appareil de filtre selon l'une quelconque des revendications précédentes, dans lequel le racleur articulé est agencé pour pivoter jusqu'à une position se trouvant à une distance prédéfinie de la plaque filtrante en réponse aux forces qui lui sont appliquées pendant le fonctionnement.

**9.** Appareil de filtre selon la revendication 9, dans lequel la sortie pour évacuer le rétentat comprend un entonnoir présentant une section transversale se rétrécissant positionné au fond du contenant.

**10.** Machine de teinture comprenant un appareil de filtre selon l'une quelconque des revendications précédentes.
